# EUROPEAN PATENT APPLICATION

(11) **EP 4 789 791 A1**
(43) Date of publication of application: **12.08.2026**
(21) Application number: 24874573.9
(22) Date of filing: 30.09.2024
(51) Int. Cl.: B21K 21/06, B21H 1/00, B21J 5/06, B23P 11/02

(54) **METHOD FOR MANUFACTURING METAL RING, AND METAL RING**

(30) Priority: 06.10.2023 JP 2023174682
(71) Applicant: UACJ Corporation, Minato-ku, Tokyo 1080073 (JP)
(72) Inventor: MORI, Masatoshi, Tokyo 108-0073 (JP)
(74) Representative: Weickmann & Weickmann PartmbB
(86) International application number: PCT/JP2024/034951
(87) International publication number: WO 2025/074971

(57) **Abstract**

A method of producing a metal ring is provided. The method of producing a metal ring includes: fitting a second ring made of aluminum or an aluminum alloy inside a first ring made of aluminum or an aluminum alloy; and forging a combined ring in which the second ring is fitted inside the first ring. The forging includes alternately repeating compressing a circumferential portion of the combined ring in a thickness direction thereof by a compression device, and moving, after the compressing, the combined ring in a circumferential direction thereof relative to the compression device.

## Description

### CROSS-REFERENCE TO RELATED APPLICATION

This international application claims the benefit of priority based on Japanese Patent Application No. 2023-174682 filed with the Japan Patent Office on October 6, 2023, and the entire disclosure of Japanese Patent Application No. 2023-174682 is incorporated into this international application by reference.

### TECHNICAL FIELD

The present disclosure relates to a method of producing a metal ring, and to a metal ring.

### BACKGROUND ART

Patent Document 1 listed below discloses a pressure welding method in which, after two metal rings are fitted together, an outer circumferential surface of the inner metal ring and an inner circumferential surface of the outer metal ring are brought into close contact with each other by ring rolling.

### PRIOR ART DOCUMENTS

### PATENT DOCUMENTS

Patent Document 1: Japanese Unexamined Patent Application Publication No. 2002-1461

### SUMMARY OF THE INVENTION

### PROBLEMS TO BE SOLVED BY THE INVENTION

In the pressure welding method by ring rolling described above, there is a limit to an area to which pressure can be applied due to the structure of the device. Therefore, it is difficult to produce a metal ring having a multi-layered structure, a large diameter, and a long length.

One aspect of the present disclosure is to provide a method of producing a metal ring having a multi-layered structure, a large diameter, and a long length.

### MEANS FOR SOLVING THE PROBLEMS

One aspect of the present disclosure is a method of producing a metal ring, the method comprising: fitting a second ring made of aluminum or an aluminum alloy inside a first ring made of aluminum or an aluminum alloy; and forging a combined ring in which the second ring is fitted inside the first ring. The forging includes alternately repeating compressing a circumferential portion of the combined ring in a thickness direction thereof by a compression device, and moving, after the compressing, the combined ring in a circumferential direction thereof relative to the compression device.

According to this configuration, the steps of compressing a portion of the combined ring and then changing the portion to be compressed are repeated, whereby forging can be performed on the combined ring even if the ring has a large diameter and a long length. Therefore, a metal ring having a multi-layered structure, a large diameter, and a long length can be obtained.

### BRIEF DESCRIPTION OF THE DRAWINGS

FIG. 1A is a schematic perspective view of a metal ring in the present embodiment, and FIG. 1B is a schematic plan view of the metal ring of FIG. 1A.
FIG. 2 is a flow of a method of producing the metal ring in the present embodiment.
FIG. 3 is a schematic diagram showing a procedure of a fitting step in the method of producing the metal ring of FIG. 2.
FIG. 4A is a schematic side view of a compression device used in a forging step in the method of producing the metal ring of FIG. 2, and FIG. 4B is a schematic front view of the compression device of FIG. 4A.

### EXPLANATION OF REFERENCE NUMERALS

100...metal ring, 101...first layer, 102...second layer, 103...third layer, 201...first ring, 202...second ring, 203...third ring, 210...combined ring, 300...compression device, 301...core member, 302...support portion, 303...press portion.

### MODE FOR CARRYING OUT THE INVENTION

Hereinafter, embodiments to which the present disclosure is applied will be described with reference to the drawings.

### [1. First Embodiment]

### [1-1. Configuration]

### <Metal Ring 100>

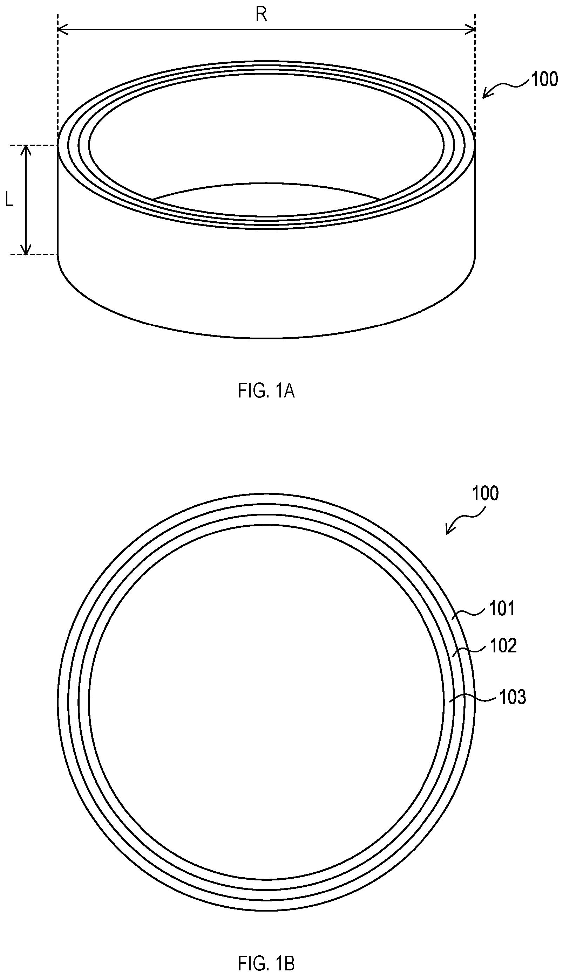

The metal ring 100 shown in FIG. 1A and FIG. 1B is a clad material including a plurality of metal layers of different compositions.

Specifically, the metal ring 100 includes a first layer 101, a second layer 102, and a third layer 103. The first layer 101 constitutes an outermost layer of the metal ring 100. The second layer 102 is arranged inside the first layer 101. The third layer 103 is arranged inside the second layer 102.

The first layer 101, the second layer 102, and the third layer 103 are each made of aluminum or an aluminum alloy. Examples of the combination of the compositions of the first layer 101, the second layer 102, and the third layer 103, according to JIS-H-4000 standards, include a combination in which the first layer 101 is A5052, the second layer 102 is A7050, and the third layer 103 is A6061.

The dimensions of the metal ring 100 fall within a first range or a second range. In the first range, an outer diameter R is 300 mm or more and 3000 mm or less, and a length L is 200 mm or more and 1500 mm or less. In the second range, the outer diameter R is 300 mm or more and 1000 mm or less, and the length L is 200 mm or more and 3000 mm or less.

### <Method of Producing a Metal Ring>

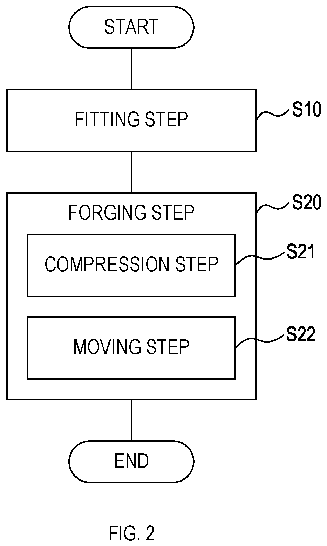

A method of producing a metal ring shown in FIG. 2 includes a fitting step S10 and a forging step S20. The metal ring 100 of FIG. 1A is obtained by the method of producing the metal ring.

### <Fitting Step>

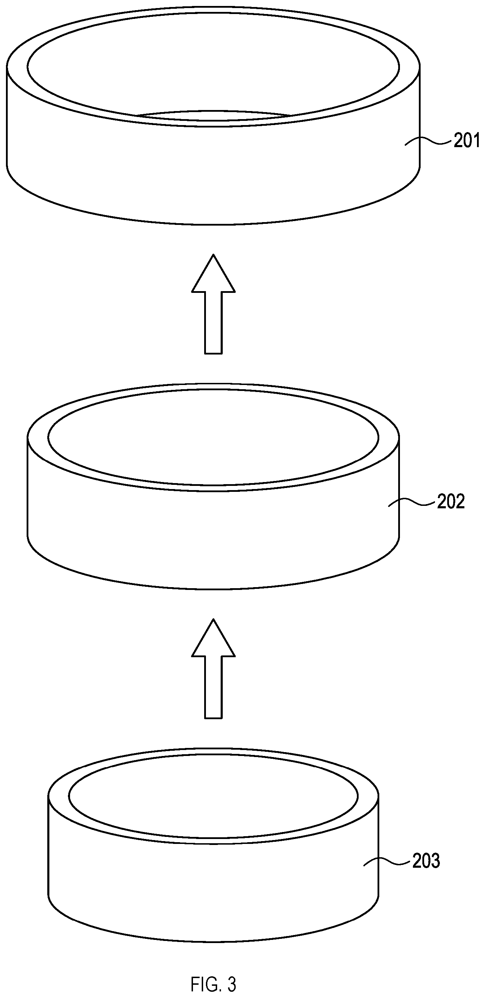

In this step, as shown in FIG. 3, a second ring 202 is fitted inside a first ring 201. In addition, a third ring 203 is fitted inside the second ring 202.

The first ring 201, the second ring 202, and the third ring 203 respectively form the first layer 101, the second layer 102, and the third layer 103 of the metal ring 100. That is, the first ring 201, the second ring 202, and the third ring 203 are made of aluminum or an aluminum alloy.

A thickness of the first ring 201 is larger than a thickness of the first layer 101. A thickness of the second ring 202 is larger than a thickness of the second layer 102. A thickness of the third ring 203 is larger than a thickness of the third layer 103.

As a specific procedure, the second ring 202 at room temperature is firstly inserted into the first ring 201 that has been thermally expanded, and the first ring 201 is cooled, whereby the second ring 202 is fitted inside the first ring 201 by shrink fitting.

Next, the third ring 203 at room temperature is inserted into the first ring 201 and the second ring 202 that have been thermally expanded, and the first ring 201 and the second ring 202 are cooled, whereby the third ring 203 is fitted to the second ring 202 by shrink fitting.

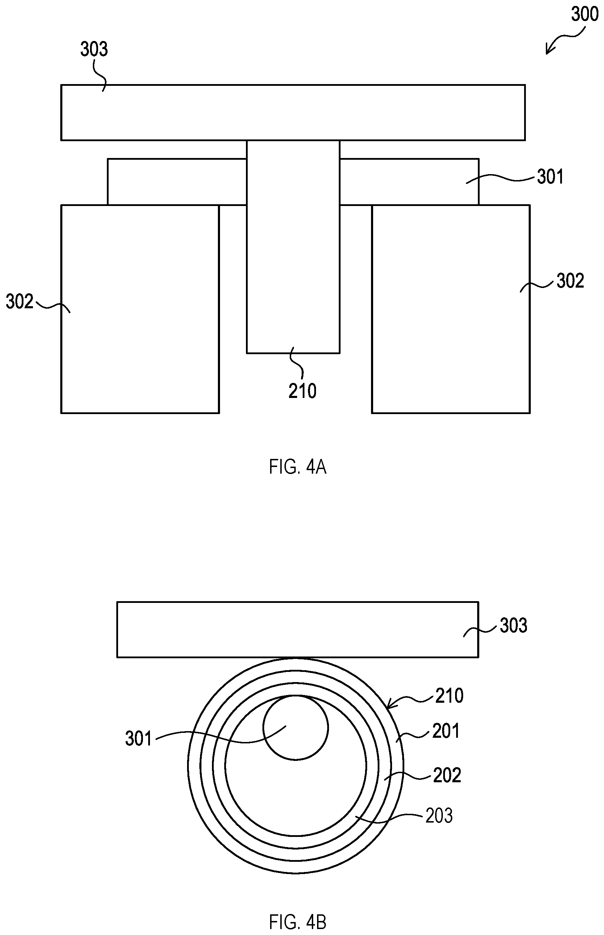

A heating temperature of each ring during shrink fitting is, for example, 300°C or higher and 450°C or lower. The shrink fitting of the second ring 202 and the third ring 203 forms a combined ring 210 (see FIG. 4B) in which the first ring 201, the second ring 202, and the third ring 203 are integrated.

### <Forging Step>

In this step, the combined ring 210, in which the second ring 202 is fitted into the first ring 201 and the third ring 203 is fitted into the second ring 202, is forged. This step includes a compression step S21 and a moving step S22.

### <Compression Step>

In this step, as shown in FIG. 4A, a circumferential portion of the combined ring 210 is compressed in a thickness direction thereof by a compression device 300. The compression device 300 includes a core member 301, a support portion 302, and a press portion 303.

The core member 301 is a cylindrical member that is inserted into the combined ring 210 in an axial direction of the combined ring 210. A length of the core member 301 is larger than a length of the combined ring 210. The core member 301 supports the combined ring 210 by contacting an inner peripheral surface of the combined ring 210 from below.

The support portion 302 supports the core member 301 from below. The support portion 302 does not directly support the combined ring 210.

The press portion 303 is configured to be movable in an up-down direction. The press portion 303 presses the combined ring 210 toward the core member 301 (specifically, downward) from a radially outer side (specifically, from above) of the combined ring 210.

The portion of the combined ring 210 pressed by the press portion 303 and the core member 301 is compressed in the thickness direction. Accordingly, the thickness of this portion is reduced, and the inner peripheral surface of the first ring 201 and the outer peripheral surface of the second ring 202, and the inner peripheral surface of the second ring 202 and the outer peripheral surface of the third ring 203 are pressure-welded to each other.

### <Moving Step>

In this step, after the compression step S21, the combined ring 210 is moved relatively to the compression device 300 in a circumferential direction of the combined ring 210.

Specifically, in a state where the pressing by the press portion 303 is released, the combined ring 210 is rotated in the circumferential direction until a portion to be compressed next comes to an upper side (that is, reaches a position facing the press portion 303).

Note that the combined ring 210 may be rotated in a state where the core member 301 is inserted into the combined ring 210. Alternatively, the combined ring 210 may be rotated after the core member 301 is removed from the combined ring 210, and thereafter, the core member 301 may be reinserted into the combined ring 210.

In the forging step S20, the compression step S21 and the moving step S22 are alternately repeated until the thickness of the entire circumference of the combined ring 210 reaches a target thickness. That is, a plurality of times of compression are performed on the same region of the combined ring 210. A ratio of the thickness of the combined ring 210 after the forging step S20 to the thickness of the combined ring 210 before the forging step S20 (that is, a compression rate) is, for example, 10% or more and 50% or less.

Note that, by repeating the compression step S21, an inner diameter of the combined ring 210 gradually increases. Therefore, the core member 301 may be replaced with one having a different outer diameter in accordance with the inner diameter of the combined ring 210 (that is, the number of times of pressing).

### [1-2. Effects]

According to the embodiment described in detail above, the following effects can be obtained.
(1a) By repeating the steps of compressing a portion of the combined ring 210 and then changing the portion to be compressed, it is possible to forge the combined ring 210 having a large diameter and a long length. Consequently, the metal ring 100 having a multi-layered structure, a large diameter, and a long length can be obtained.
(1b) Fitting the second ring 202 into the first ring 201 by shrink fitting can reduce the number of steps for obtaining the combined ring 210.
(1c) Rotating the combined ring 210 in the moving step S22 can improve workability, compared with a case where the compression device 300 (that is, the core member 301 and the press portion 303) is moved.
(1d) The use of the compression device 300 including the core member 301 and the press portion 303 allows for the production of the metal ring 100 having a multi-layered structure, a large diameter, and a long length by utilizing existing equipment.

### [2. Other Embodiments]

While the embodiment of the present disclosure has been described above, it should be understood that the present disclosure is not limited to the above-described embodiment and can take various forms.
(2a) In the method of producing the metal ring of the above-described embodiment, the metal ring 100 may have a two-layered structure. That is, the metal ring 100 may include only the first layer 101 and the second layer 102. In addition, the metal ring 100 may have a structure of four or more layers. That is, the metal ring 100 may further include one or more layers arranged inside the third layer 103.
(2b) In the method of producing the metal ring of the above-described embodiment, freeze fitting may be used instead of shrink fitting in the fitting step. For example, the second ring 202 that has been contracted by cooling may be inserted into the first ring 201 at room temperature, and then heated, whereby the second ring 202 is fitted inside the first ring 201.
(2c) In the method of producing the metal ring of the above-described embodiment, a part of the compression device 300 (for example, the core member 301) may be moved relative to the combined ring 210 in the moving step, instead of rotating the combined ring 210.
(2d) The functions of one constituent element in the above-described embodiment may be distributed to a plurality of constituent elements, or the functions of a plurality of constituent elements may be integrated into one constituent element. In addition, a portion of the configuration of the above-described embodiments may be omitted. In addition, at least a portion of the configuration of one of the above-described embodiments may be added to or replaced with the configuration of another of the above-described embodiments. Note that any aspect encompassed by the technical idea specified by the wording of the present disclosure is regarded as an embodiment of the present disclosure.

## Claims

1. A method of producing a metal ring, the method comprising:
fitting a second ring made of aluminum or an aluminum alloy inside a first ring made of aluminum or an aluminum alloy; and
forging a combined ring in which the second ring is fitted inside the first ring,
wherein the forging includes alternately repeating
compressing a circumferential portion of the combined ring in a thickness direction thereof by a compression device, and
moving, after the compressing, the combined ring in a circumferential direction thereof relative to the compression device.

2. The method of producing a metal ring according to claim 1,
wherein the fitting includes inserting the second ring into the first ring that has been thermally expanded, and cooling the first ring.

3. The method of producing a metal ring according to claim 1,
wherein the moving includes rotating the combined ring in the circumferential direction.

4. The method of producing a metal ring according to any one of claims 1 to 3,
wherein the compression device includes
a core member configured to be inserted through the combined ring, and
a press portion configured to press the combined ring from a radially outer side of the combined ring toward the core member.

5. The method of producing a metal ring according to any one of claims 1 to 3,
wherein the forging includes obtaining a metal ring having
an outer diameter of 300 mm or more and 3000 mm or less and a length of 200 mm or more and 1500 mm or less, or
an outer diameter of 300 mm or more and 1000 mm or less and a length of 200 mm or more and 3000 mm or less.

6. A metal ring comprising:
a first layer made of aluminum or an aluminum alloy; and
a second layer made of aluminum or an aluminum alloy and arranged inside the first layer,
wherein the metal ring has
an outer diameter of 300 mm or more and 3000 mm or less and a length of 200 mm or more and 1500 mm or less, or
an outer diameter of 300 mm or more and 1000 mm or less and a length of 200 mm or more and 3000 mm or less.
